# EUROPEAN PATENT APPLICATION

(11) **EP 4 844 573 A1**
(43) Date of publication of application: **25.11.2026**
(21) Application number: 25177247.1
(22) Date of filing: 19.05.2025
(51) Int. Cl.: G06F 8/38, G06T 19/00, G06F 3/04815, G06F 3/01, G06F 30/20

(54) **AUTOMATED CONVERSION OF TWO-DIMENSIONAL HMI ARTEFACTS INTO THREE-DIMENSIONAL INTERFACES**

(71) Applicant: Siemens Aktiengesellschaft, 80333 München (DE)
(72) Inventor: Dixit, Vikas, 560105 Bandenalsandra Jigani, (IN)
(74) Representative: Isarpatent

(57) **Abstract**

A computer-implemented method for automated conversion of a plurality of two-dimensional (2D) human machine interfaces (HMI) artefacts into a plurality of interactive three-dimensional (three-dimensional) human-machine interfaces (human machine interfaces (HMI)) is disclosed. The method comprises receiving, at an artificial intelligence (AI) engine, a plurality of 2D human machine interfaces (HMI) artefacts and associated natural-language annotations. A language model engine detects a plurality of user interface (UI) component descriptors and spatial relations from the received artefacts and annotations. A knowledge model determines a mapping between the detected UI widgets and a set of three-dimensional widget templates stored in a template library database. A three-dimensional asset generation module generates a plurality of corresponding three-dimensional widget instances and synchronizes these instances with live data streams. A rendering engine outputs the three-dimensional widget instances to at least one runtime environment, wherein the three-dimensional widget instances are configured to interact with real-world process data in real time.

## Description

The present disclosure relates to a field of industrial automation visualisation and more particularly relates to a method and system for automated conversion of 2D human machine interfaces (HMI) artefacts into interactive three-dimensional human machine interfaces (HMI).

A manufacturing facility such as a glass-bottle bottling plant relies on supervisory control and data acquisition (SCADA) systems and human-machine interfaces (human machine interfaces (HMI)) that historically present information on 2D panels. Each panel may contain dozens of graphical widgets-gauges, pumps, tank indicators-and is rendered by legacy engineering tools like WinCC Basic, Comfort, or Unified screens. When operators wish to upgrade to immersive three-dimensional dashboards for improved spatial awareness they must currently rebuild every widget manually inside a separate three-dimensional modelling program, re-script data bindings, and verify behaviour, a process that can last weeks for a single production line.

The manual workflow introduces inconsistencies, breaks data links, and requires scarce three-dimensional specialists, making large-scale retrofits economically prohibitive. Even when a three-dimensional prototype is produced, control engineers without graphics expertise struggle to tweak colour schemes or relocate widgets, because existing suites lack a conversational editing channel that understands process semantics. Further, once a three-dimensional screen is deployed, maintaining synchronous updates with live plant signals often involves hand-written scripts; missing or incorrect mappings can lead to safety-critical discrepancies between the virtual dashboard and the physical line.

Current tools also fail to keep a lineage of layout versions, so rolling back an experimental change forces engineers to reconstruct prior states from memory. Accordingly, there is a clear demand for an automated, knowledge-guided pipeline that can ingest heterogeneous 2D artefacts together with natural-language notes, reason over domain rules, produce deployable three-dimensional human machine interfaces (HMI), and keep them continuously linked to real-time data with minimal human effort.

Thus, it is an object of the present disclosure to provide a method and system for automated conversion of 2D human machine interfaces (HMI) artefacts into interactive three-dimensional human machine interfaces (HMI).

The object of the present disclosure is achieved by a method of automated conversion of 2D human machine interfaces (HMI) artefacts into interactive three-dimensional human machine interfaces (HMI). The method comprises receiving, at an artificial intelligence (AI) engine, the plurality of 2D human machine interfaces (HMI) artefacts and a plurality of natural-language annotations. The method further comprises detecting a plurality of artefact formats in the plurality of 2D human machine interfaces (HMI) artefacts and applying a selected parsing routine for each detected artefact format prior to the detecting by a language model. The method further comprises detecting, by the language model, a plurality of UI widgets and a plurality of spatial relations from the plurality of 2D human machine interfaces (HMI) artefacts and the plurality of natural-language annotations.

The method further comprises generating a normalized data structure that comprises a plurality of widget identifiers and the plurality of spatial relations. The method further comprises receiving, via an automated chat interface, a plurality of dialogue-based modification requests and modifying the normalized data structure in response to the plurality of dialogue-based modification requests. The method further comprises determining, by a knowledge model, a mapping between the plurality of detected UI widgets and a plurality of three-dimensional widget templates in a template library.

The method further comprises allocating, by a three-dimensional asset generation module, a unique identifier to each of the plurality of detected UI widgets to enable synchronization with at least one of a plurality of live data streams. The method further comprises generating, by the three-dimensional asset generation module, a plurality of three-dimensional widget instances and synchronizing the plurality of three-dimensional widget instances with the plurality of live data streams. The method further comprises synchronizing, by the three-dimensional asset generation module, each of the plurality of three-dimensional widget instances to a corresponding live data stream via an application programming interface provided by a data platform.

The method further comprises displaying, by a three-dimensional widget generator user interface portal, a live preview of the plurality of three-dimensional widget instances in a runtime environment. The method further comprises allocating and storing a plurality of historical layout states, and extricating a selected historical layout state upon receiving a rollback request. The method further comprises controlling execution, by an artificial intelligence (AI) orchestration layer, of regeneration of the plurality of three-dimensional widget instances based on the modified normalized data structure and outputting delta updates to a rendering engine.

The method further comprises outputting, by the rendering engine, the plurality of three-dimensional widget instances to at least one runtime environment, wherein the plurality of three-dimensional widget instances are configured to interact with real-world process data in real time. The method further comprises controlling, by the rendering engine, a plurality of display parameters including a camera perspective in the runtime environment.

The object of the present disclosure is further achieved by a system for automated conversion of 2D human machine interfaces (HMI) artefacts into interactive three-dimensional human machine interfaces (HMI). The system comprises an input interface configured to receive the plurality of 2D human machine interfaces (HMI) artefacts and the plurality of natural-language annotations. The system further comprises a detection module configured to detect the plurality of artefact formats in the plurality of 2D human machine interfaces (HMI) artefacts and to select the parsing routine for each artefact format for use by a language model engine. The system further comprises the language model engine configured to detect the plurality of UI component descriptors and the plurality of spatial relations from the plurality of 2D human machine interfaces (HMI) artefacts and the plurality of natural-language annotations.

The system further comprises a normalized data structure generator configured to generate the normalized data structure comprising the plurality of widget identifiers and the plurality of spatial relations. The system further comprises the automated chat interface configured to receive the plurality of dialogue-based modification requests and to modify the normalized data structure in response to the plurality of dialogue-based modification requests. The system further comprises the knowledge model configured to determine the mapping between the plurality of detected UI widgets and the plurality of three-dimensional widget templates in the template library.

The system further comprises the three-dimensional asset generation module configured to allocate the unique identifier to each of the plurality of detected UI widgets to enable synchronization with at least one of the plurality of live data streams. The three-dimensional asset generation module is further configured to generate the plurality of three-dimensional widget instances and to synchronize the plurality of three-dimensional widget instances with the plurality of live data streams. The three-dimensional asset generation module is further configured to synchronize each of the plurality of three-dimensional widget instances to the corresponding live data stream via the application programming interface provided by the data platform.

The system further comprises the three-dimensional widget generator UI portal configured to display the live preview of the plurality of three-dimensional widget instances in the runtime environment. The system further comprises a storage module configured to allocate and store the plurality of historical layout states and to extricate the selected historical layout state upon receiving the rollback request. The system further comprises the artificial intelligence (AI) orchestration layer configured to control execution of regeneration of the plurality of three-dimensional widget instances based on the modified normalized data structure and to output delta updates to the rendering engine.

The system further comprises the rendering engine configured to output the plurality of three-dimensional widget instances to at least one runtime environment, wherein the plurality of three-dimensional widget instances are configured to interact with real-world process data in real time. The rendering engine is further configured to control the plurality of display parameters including the camera perspective in the runtime environment.

The above-mentioned and other features of the disclosure will now be addressed with reference to the accompanying drawings of the present disclosure. The illustrated embodiments are intended to illustrate, but not limit the disclosure.
FIG 1 is a block diagram of an industrial visualization environment 100 capable of automatically converting 2D human machine interfaces (HMI) artefacts into interactive three-dimensional human machine interfaces (HMI), according to an embodiment of the present disclosure;
FIG 2 is a block diagram of a conversion system, such as those shown in FIG. 1, in which an embodiment of the present disclosure can be implemented;
FIG 3 is a block diagram of a conversion automation module, such as those shown in FIG. 2, in which an embodiment of the present disclosure can be implemented; and
FIG 4 is a process flowchart illustrating an exemplary method of automated conversion of 2D human machine interfaces (HMI) artefacts into interactive three-dimensional human machine interfaces (HMI), according to an embodiment of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

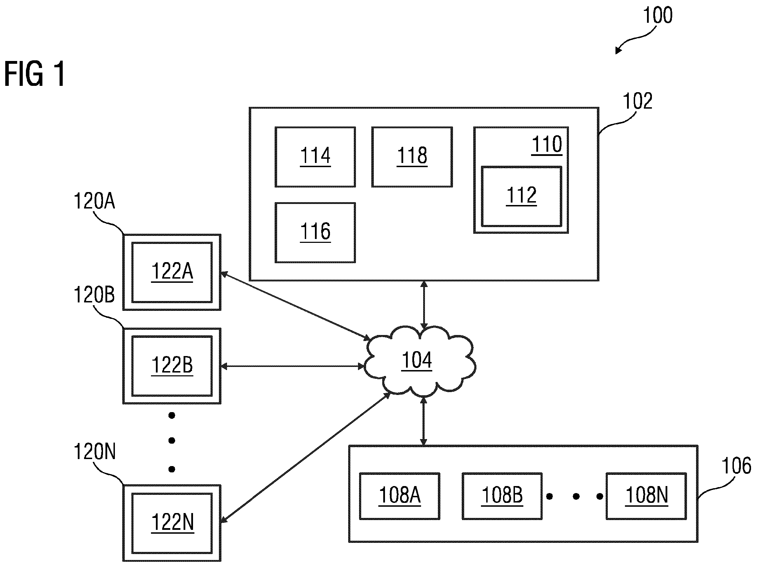

FIG 1 is a block diagram of an industrial visualization environment 100 capable of automatically converting 2D human machine interfaces (HMI) artefacts into interactive three-dimensional human machine interfaces (HMI), according to an embodiment of the present disclosure. In FIG 1, the industrial visualization environment 100 includes a conversion system 102, a technical installation 106 and one or more client devices 120A-N.

As used herein, "industrial visualization environment" refers to a processing environment comprising configurable computing physical and logical resources, for example, networks, servers, storage, applications, services, etc., and data distributed over a platform, such as a cloud computing platform.

The industrial visualization environment 100 provides on-demand network access to a shared pool of the configurable computing physical and logical resources. The conversion system 102 is communicatively connected to the technical installation 106 via the network 104 (such as Local Area Network (LAN), Wide Area Network (WAN), Wi-Fi, Internet, any short-range or wide-range communication).

The conversion system 102 is also connected to the one or more client devices 120A-N via the network 104. The conversion system 102 is connected to one or more process objects 108A-N in the technical installation 106 via the network 104. The one or more process objects 108A-N may include programmable logic controllers (PLCs), human-machine interfaces (human machine interfaces (HMI)), motors, valves, pumps, actuators, sensors and other industrial equipment. The one or more process objects 108A-N may be connected to each other or several other components via physical connections. The physical connections may be through wiring between the one or more process objects 108A-N. Alternatively, the one or more process objects 108A-N may also be connected via non-physical connections (such as Internet of Things (IoT)) and 5G networks.

Although FIG 1 illustrates the conversion system 102 connected to one technical installation 106, one skilled in the art can envision that the conversion system 102 can be connected to several technical installations located at different geographical locations via the network 104.

The client devices 120A-N may be a desktop computer, laptop computer, tablet, smart phone and the like. Each of the client devices 120A-N is provided with a three-dimensional widget generator tool 122A-N for generating and/or editing visualization layouts respectively. The client devices 120A-N can access the conversion system 102 for automatically generating three-dimensional human machine interfaces (HMI). The client devices 120A-N can access cloud applications (such as providing performance visualization of the one or more process objects 108A-N via a web browser). Throughout the specification, the terms "client device" and "user device" are used interchangeably.

The conversion system 102 may be a standalone server deployed at a control station or may be a remote server on a cloud computing platform. In a non-claimed embodiment, the conversion system 102 may be a cloud-based conversion system. The conversion system 102 is capable of delivering applications (such as cloud applications) for managing the technical installation 106 comprising one or more process objects 108A-N. The conversion system 102 may comprise a platform 110, a conversion automation module 112, a server 114 including hardware resources and an operating system (OS), a network interface 116 and a database 118.

The network interface 116 enables communication between the conversion system 102, the technical installation 106, and the client device(s) 120A-N. The interface may allow engineers at the one or more client device(s) 120A-N to access visualization project files stored at the conversion system 102 and perform one or more actions on the project files as the same instance. The server 114 may include one or more servers on which the OS is installed. The servers 114 may comprise one or more processors, one or more storage devices for storing data and machine-readable instructions, and other peripherals required for providing computing functionality. The platform 110 enables functionalities such as data reception, data processing, data rendering, data communication, etc. using the hardware resources and the OS of the servers 114 and delivers the aforementioned services using the application programming interfaces deployed therein.

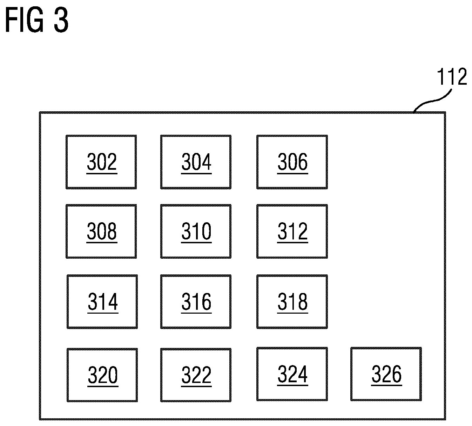

The platform 110 may comprise a combination of dedicated hardware and software built on top of the hardware and the OS. The platform 110 may further comprise the conversion automation module 112 configured for generating interactive three-dimensional human machine interfaces (HMI). Details of the conversion automation module 112 are explained in FIG. 3. The database 118 stores information relating to the technical installation 106 and the client device(s) 120A-N. The database 118 is, for example, a Structured Query Language (SQL) data store or a Not Only SQL (NoSQL) data store. In an exemplary non-claimed embodiment, the database 118 may be configured as a cloud-based database implemented in the industrial visualization environment 100. The database 118, according to another non-claimed embodiment, is a location on a file system directly accessible by the conversion automation module 112. The database 118 is configured to store visualization project files, normalized layout structures, widget templates, parameter values associated with the one or more process objects 108A-N, test results, simulation results, status messages, one or more preview instances, graphical programs, change logs, and the like.

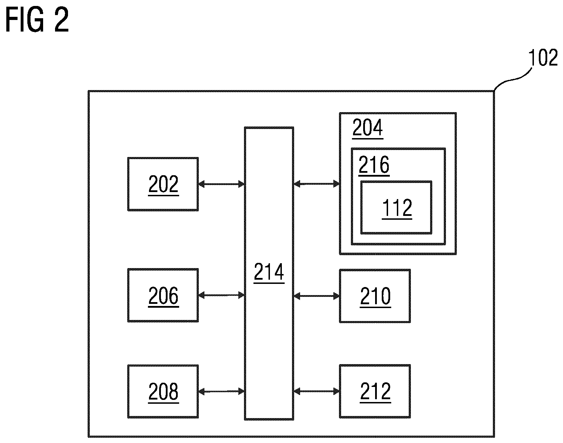

FIG 2 is a block diagram of a conversion system 102, such as those shown in FIG 1, in which an embodiment of the present disclosure can be implemented. In FIG 2, the conversion system 102 includes a processor(s) 202, an accessible memory 204, a storage unit 206, a communication interface 208, an input-output unit 210, a network interface 212 and a bus 214. The processor(s) 202 may include any type of computational circuit such as a microprocessor unit, microcontroller, graphics processing unit, or digital signal processing unit. The memory 204 may be non-transitory volatile memory and non-volatile memory and may store machine-readable instructions executed by the processor(s) 202.

In the present embodiment, the memory 204 includes an integrated development environment (IDE) 216. The IDE 216 includes the conversion automation module 112 stored in the form of machine-readable instructions and may be executed by the processor(s) 202. The storage unit 206 may be a non-transitory storage medium configured for storing the database 118 which comprises server versions of visualization templates and widget libraries.

The communication interface 208 is configured for establishing communication sessions between the one or more client devices 120A-N and the conversion system 102. The communication interface 208 allows the one or more visualization applications running on the client devices 120AN to import/export project files into the conversion system 102.

The input-output unit 210 may include input devices such as a keypad, touch-sensitive display, or camera capable of receiving input signals, and a display unit for displaying a graphical user interface which visualizes live previews of generated three-dimensional human machine interfaces (HMI).

The bus 214 acts as an interconnect between the processor 202, the memory 204, and the input-output unit 210. The network interface 212 may be configured to handle network connectivity, bandwidth and network traffic between the conversion system 102, client devices 120A-N and the technical installation 106.

Those of ordinary skill in the art will appreciate that the hardware depicted in FIG 2 may vary for particular implementations and that the depicted example is provided for the purpose of explanation only.

FIG. 3 is a block diagram of a conversion automation module 112, such as those shown in FIG. 2, in which an embodiment of the present disclosure can be implemented. In FIG. 3, the conversion automation module 112 comprises a detection module 302, an artificial intelligence (AI) engine 304, a knowledge model 306, a three-dimensional asset generation module 308, a template library database 310, a three-dimensional widget generator UI portal 312, an artificial intelligence (AI) orchestration layer 314, a rendering engine 316, a storage module 318, an automated chat interface 320, a normalized data structure generator 322, a language model engine 324, and a Security and Access Control Module 326. FIG. 3 is explained in conjunction with FIG. 1 and FIG. 2.

As used herein, the term "module," "engine," or "model" refers to a functional unit that may be implemented in hardware, software, firmware, or any suitable combination thereof and, when embodied in software, comprises a set of computer-executable instructions that are stored on a machine-readable medium and executed by one or more processors to perform the described functions. Enabling a module, engine, or model may comprise loading the associated instructions into memory, initializing configuration and data structures, and establishing or registering required communications with other system components or external resources. The described modules, engines, and models may be implemented within a single device or distributed across multiple networked devices, may be instantiated at system initialization or in response to an event, and may scale dynamically based on system demands.

The detection module 302 is a component for receiving and processing requests to convert 2D human machine interfaces (HMI) artefacts into a normalized internal format. For example, the request is received from one of the users external to the industrial visualization environment 100 via a network. In an alternative embodiment, the request is received from the one or more client devices 120A-N via the network. The detection module 302 is further configured to detect artefact formats and apply a selected parsing routine for each detected format. The detection module 302 may be provided as a standalone executable, a dynamically loadable software component, or as a microservice within a distributed system. Upon being enabled, it establishes communication protocols with client devices and other internal modules to authenticate and process incoming requests. Its initialization includes memory allocation for buffering input data and loading any necessary parsing libraries or plugins.

The artificial intelligence (AI) engine 304 is configured to analyze incoming artefact and annotation data for further processing. The artificial intelligence (AI) engine 304 may be implemented as a set of algorithms, executed by a dedicated processor or within a virtualized container environment. Upon activation, configuration files are read to set operational parameters and model weights. The artificial intelligence (AI) engine is further enabled to scale computational resources dynamically based on input volume or system load, enhancing performance and reliability.

The knowledge model 306 is a mapping logic subsystem that associates detected UI widgets with available three-dimensional widget templates. The knowledge model 306 may utilize a rules-based engine, a machine learning inference module, or a hybrid approach, and can be updated remotely via downloadable knowledge bases. Enabling the model includes initializing rule sets, neural network weights, or mapping tables required for widget-template association. Communication interfaces are established with the template library database 310 and with system logs for monitoring mapping outcomes.

The three-dimensional asset generation module 308 generates three-dimensional widget instances and ensures their identifiers and data linkages are correctly assigned and maintained. This module may be realized as a plug-in within a graphics engine, a server-side microservice, or a set of cloud functions. During initialization, the three-dimensional asset generation module 308 connects to data sources for live streams and preloads baseline three-dimensional asset definitions from the template library. It also provisions real-time communication channels to allow feedback, error reporting, and status updates to administrative interfaces.

The template library database 310 is a structured storage system for three-dimensional widget templates, layout states, and metadata. The template library database 310 may be implemented using a relational database, NoSQL store, or a graph database, depending on scalability and cross-referencing requirements. Database initialization involves setting up schema definitions, access indices, and data integrity constraints. The module is further enabled to perform automated backups, support secure transactions, and provide access control based on user credentials.

The three-dimensional widget generator UI portal 312 is a user-facing interface for previewing, simulating, and validating auto-generated three-dimensional human machine interfaces (HMI). The UI portal may be delivered as a web application, desktop app, or as a module embedded within a supervisory control system. When enabled, it initiates a graphical user interface session and subscribes to data from backend modules for real-time three-dimensional rendering and simulation. User customization and feedback tools are available to iteratively refine generated three-dimensional human machine interfaces (HMI) artifacts.

The artificial intelligence (AI) orchestration layer 314 is a process control layer that coordinates AI and data processing workflows through the system. The artificial intelligence (AI) orchestration layer 314 may be embodied as a workflow engine, service mesh, or container orchestrator depending on the deployment architecture. It is enabled by loading predefined orchestration scripts or rules and connecting with monitoring subsystems to track runtime events. This module also mediates coordination among Al models, generation modules, and output engines using standardized messaging queues or APIs.

The rendering engine 316 manages the visualization of three-dimensional widget instances and their real-time output to runtime environments. The rendering engine 316 can be realized using open-source or proprietary three-dimensional graphics frameworks, supporting both local and remote visualization. Upon start-up, it allocates rendering resources, configures hardware acceleration settings, and synchronizes display parameters with the requirements of the runtime environment. Its enablement further includes fault tolerance measures to preserve rendering state and recover gracefully from system interruptions.

The storage module 318 is responsible for persistent storage and selective retrieval of layout states and rollback information. The storage module 318 can utilize persistent storage managed by database servers, object storage systems, or distributed file systems. When enabled, it creates or mounts necessary data repositories, establishes data encryption as required, and indexes layout state metadata for quick retrieval. This module may automatically archive expired or infrequently used states according to policy-driven lifecycle management rules.

The automated chat interface 320 is an interactive system enabling users to provide natural-language modification requests related to layouts and widgets. The chat interface may be deployable as a chatbot, an API endpoint, or an adaptive UI within dashboards or client applications. Initializing the automated chat interface 320 involves connecting to natural language processing services and loading custom interaction flows. The module is further enabled to log conversations, handle session context, and interface securely with underlying modules to validate and implement modification requests.

The normalized data structure generator 322 is a data transformation engine that constructs normalized, machine-usable structures from parsed and annotated input. This generator may be implemented as a real-time data transformation service, a batch processing job, or as a script invoked by the orchestration layer. Initialization routines allocate working buffers and load schema validation rules to ensure proper normalization of input data. The module is further enabled to verify data integrity, record transformation logs, and communicate normalized outputs to downstream modules.

The language model engine 324 is a computational linguistic system for extracting semantic and spatial relationships from artefact annotations. The language model engine 324 may be based on pretrained transformer architectures, rule-based NLP engines, or a combination thereof. On activation, the engine loads relevant language models and vocabularies, and initializes memory needed for high-throughput natural language analysis. Secure communication channels are set up for data exchange with upstream modules and for outputting processed descriptors.

The Security and Access Control Module 326 is a system security subsystem managing authentication, authorization, and system policy enforcement across all modules. This Security and Access Control Module 326 can be instantiated as a centralized security server, a distributed policy agent, or embedded logic within each major subsystem. On enablement, it loads access control lists, initializes cryptographic keys, and establishes monitoring hooks for real-time detection of unauthorized access attempts. The Security and Access Control Module 326 also supports dynamic updates to policies and provides audit logs for compliance and troubleshooting.

Those skilled in the art will recognize that, for simplicity and clarity, the full structure and operation of all data processing systems suitable for use with the present disclosure is not being depicted or described herein; instead, only so much of the conversion system as is unique to the present disclosure or necessary for an understanding of the present disclosure is depicted and described. The remainder of the construction and operation of the conversion system may conform to any of the various current implementation and practices known in the art. Where modules, models, or engines are described as software, the respective functions may be implemented as program code in any suitable programming language and may be stored on tangible, non-transitory machine-readable media. The enablement and activation of modules, models, and engines may be performed automatically at start-up or dynamically in response to specific events, with suitable access control managed by the security modules described above.

When executed by the processor 202, the conversion automation module 112 causes the processor 202 to automate conversion of a plurality of 2D human machine interfaces (HMI) artefacts into a plurality of interactive three-dimensional human machine interfaces (HMI). An interactive three-dimensional human machine interfaces (HMI) is a three-dimensional, user-operable visualisation of industrial processes and constitutes the final output delivered by the automated conversion pipeline. The three-dimensional, user-operable visualisation of industrial processes is a rendered scene that depicts equipment, sensors and UI widgets in spatial context so that an operator can interact with process variables through pointing, clicking or gesturing. The automated conversion pipeline is a sequence of software modules that transform legacy 2D human machine interfaces (HMI) artefacts and a plurality of natural-language annotations into a plurality of interactive three-dimensional human machine interfaces (HMI) without manual modelling. Examples of the interactive three-dimensional human machine interfaces (HMI) include, but are not limited to, a Web Graphics Library-based chemical-reactor dashboard, a Unity runtime mining-conveyor control panel and a WinCC Unified augmented-reality turbine monitor, each of which enables operators to inspect real-time sensor values in an immersive scene.

The conversion automation module 112 is configured to cause the processor 202 to receive, at the artificial intelligence (AI) engine 304, a plurality of 2D human machine interfaces (HMI) artefacts together with a plurality of natural-language annotations. The artificial intelligence (AI) engine 304 is a software subsystem that orchestrates language-model inference, knowledge-model reasoning and three-dimensional asset-generation tasks required for automated conversion; a real-world example is a Kubernetes-hosted Python microservice that runs Transformer models on a graphics-processing-unit cluster. The artificial intelligence (AI) engine 304 ingests the data via an input interface that retrieves upload requests originating from at least one of a project-file repository, a network-connected historian database or a computer-aided-design workstation. A 2D human machine interfaces (HMI) artefact is a digital file, such as an XML file, a CSV file, a Unified Interface Architecture file or a Siemens Data File representation, that encodes widget coordinates, event scripts and graphical resources originally used by a legacy operator panel. An example of the 2D human machine interfaces (HMI) artefact is a WinCC Comfort screen that is exported from a bottling-plant filler station. A natural-language annotation is a free-text comment block or transcript that describes intended Ul-widget behaviour or layout semantics; an example of the natural-language annotation is the sentence "Place the pressure gauge above the pump icon and colour it yellow when the value exceeds 3 bar." Each natural-language annotation is received in Unicode JSON format with an average length of 120 characters. The plurality of 2D human machine interfaces (HMI) artefacts and the plurality of natural-language annotations are received from the input interface and forwarded to the artificial intelligence (AI) engine 304 for further processing.

The conversion automation module 112 is configured to cause the processor 202 to detect, via the detection module 302, a plurality of artefact formats within the plurality of 2D human machine interfaces (HMI) artefacts and subsequently apply a selected parsing routine for each detected artefact format before the language model engine 324 processes the artefacts. The detection module 302 analyses header bytes, metadata fields and file-name extensions in order to identify the artefact format associated with each digital file. Detection is performed by application of an algorithm such as at least one of a k-nearest-neighbour classifier, a signature-based checksum comparison or a random-forest classifier on metadata extracted from each artefact header. The algorithm classifies the artefact according to file extension, markup schema and embedded namespace identifiers. In one embodiment, the detection module 302 applies the random-forest classifier to detect the artefact format of each digital file. Once the artefact format is detected, a parsing routine that corresponds to the format is invoked so that the language model engine 324 receives uniformly structured tokens. A parsing routine is a software procedure that converts the detected artefact into a machine-readable token stream and therefore enables the language model engine 324 to process heterogeneous legacy files in a uniform manner. Examples of the parsing routine include, but are not limited to, an XML Document Object Model walker, a CSV line tokeniser and a proprietary WinCC compressed-archive extractor. This automatic branching eliminates manual format pre-selection that traditionally slows reverse-engineering work. The detection module 302 encapsulates the artefact-format classifier and the parser-dispatch logic; a real-world example is a Python service that watches an upload directory and assigns every incoming file to the appropriate parser within 50 milliseconds.

The conversion automation module 112 is configured to cause the processor 202 to detect, by the language model engine 324, a plurality of user interface widgets and a plurality of spatial relations from the plurality of 2D human machine interfaces (HMI) artefacts and the plurality of natural-language annotations. Each UI widget of the plurality of UI widgets is represented by a UI component descriptor which is a textual or symbolic label, such as "pumpStatusLamp" or "tankLevelSlider", that uniquely names the UI widget. A spatial relation is a tuple that captures geometric placement, such as "left-of", "above" or "aligned-centre". Detection is performed by application of an algorithm such as at least one of a Bidirectional Encoder Representations from Transformers sequence-labelling algorithm, a graph-neural-network algorithm or a conditional random-field algorithm on concatenated visual markup and annotation text. The algorithm assigns entity tags to tokens and outputs bounding-box coordinates normalised to a 0-1 canvas space. In one embodiment, the language model engine 324 applies the Bidirectional Encoder Representations from Transformers sequence-labelling algorithm. The language model engine 324 is a parameter-efficient Transformer with 350 million parameters that has been fine-tuned on 40 000 labelled industrial dashboard examples; the input is a concatenated token sequence of markup tags and natural-language notes, and the output is a list of entity spans with class labels and relative positions. Training data are synthetic renderings paired with annotation files, and the language model engine 324 is trained by minimising a cross-entropy loss over token-level tags for ten epochs on an Nvidia A100 accelerator. The output allows downstream modules to reconstruct a faithful scene graph without manual coordinate entry, thereby reducing human error.

The conversion automation module 112 is configured to cause the processor 202 to generate, via the normalized data structure generator 322, a normalized data structure that comprises a plurality of widget identifiers and the plurality of spatial relations. The normalized data structure is a JSON document in which each widget identifier is stored as a Universally Unique Identifier string of 128-bit length and each spatial relation is stored as an object that contains origin coordinates expressed in pixels, rotation expressed in degrees and z-index depth expressed as an integer. A real-world example of the normalized data structure is a file named "line1_filler_scene.json" that lists 48 widget identifiers corresponding to valves, gauges and conveyors of a beverage-filling line, thereby allowing downstream modules to reason over the scene in a vendor-agnostic fashion. The normalized data structure generator 322 serialises the outputs of the language model engine 324 into a schema defined in JSON Schema Definition draft-07 and validates the document before storage, guaranteeing structural consistency for later processing stages.

The conversion automation module 112 is configured to cause the processor 202 to receive, via the automated chat interface 320, a plurality of dialogue-based modification requests and modify the normalized data structure in response to the plurality of dialogue-based modification requests. The automated chat interface 320 captures text utterances originating from an operator-workstation chat window that connects to the artificial intelligence (AI) engine 304 through a WebSocket channel. Each dialogue-based modification request is received from a human designer, for example, "Move the temperature dial 30 pixels to the right and make its background transparent." Modification is performed by application of an algorithm such as at least one of a reinforcement-learning-from-human-feedback policy model, an intent-classification long short-term memory network or a rule-based natural-language command interpreter on the incoming chat text. The algorithm parses the intent, locates the affected widget identifier and updates the corresponding spatial-relation or property fields inside the JSON document. In one embodiment, the automated chat interface 320 applies the reinforcement-learning-from-human-feedback policy model. The automated chat interface 320 is a web component that embeds a large-language-model endpoint and a context buffer to maintain dialogue state; a real-world example is a React front-end that streams prompts to a hosted ChatGPT API and receives delta changes under 200 milliseconds. This conversational editing capability allows non-programmer staff to achieve layout changes in seconds, whereas traditional graphic editors previously demanded manual drag-and-drop operations.

The conversion automation module 112 is configured to cause the processor 202 to determine, via the knowledge model 306, a mapping between the plurality of detected UI widgets and a plurality of three-dimensional widget templates in the template library database 310. The knowledge model 306 is a rules-enhanced embedding matcher that combines semantic-similarity metrics with domain ontologies to guarantee functional equivalence between a detected 2D UI widget and a candidate three-dimensional widget template; a real-world example is an ontology-backed Python service that links a "pumpStatusLamp" tag to a rotating pump mesh that contains a status-colour material slot. The template library database 310 is a curated repository of parameterised three-dimensional widget prototypes that provides the source assets selected during the 2D-to-three-dimensional mapping. Mapping is performed by application of an algorithm such as at least one of a semantic-similarity cosine-distance algorithm, a hierarchical ontology-matching algorithm or a multilayer perceptron classifier on widget-descriptor embeddings. The algorithm assigns, for every 2D widget identifier, a best-fit three-dimensional template that preserves function and data bindings. In one embodiment, the knowledge model 306 applies the hierarchical ontology-matching algorithm. A three-dimensional widget template is a parameterised Graphics Language Transmission Format asset that includes geometry, material and animation placeholders; for example, a generic "rotaryPumpTemplate.glb" can be instantiated into multiple pump indicators across a plant dashboard.

The conversion automation module 112 is configured to cause the processor 202 to allocate, via the three-dimensional asset generation module 308, a unique identifier to each of the plurality of detected UI widgets to enable synchronisation with at least one of a plurality of live data streams. The three-dimensional asset generation module 308 generates a Universally Unique Identifier version-4 string and stores it alongside the widget instance inside a scene graph. A live data stream is a Transmission Control Protocol message that carries sensor values at one-second intervals, for instance, "tankPressure: 4.8 bar". Associating a unique identifier with a live-datastream endpoint ensures that subsequent updates are routed deterministically to the correct three-dimensional object.

The conversion automation module 112 is enabled to cause the processor 202 to generate, via the three-dimensional asset generation module 308, a plurality of three-dimensional widget instances based on the determined mapping between detected UI widgets and corresponding three-dimensional widget templates. Enabling this step comprises invoking a template instantiation routine, allocating memory for each three-dimensional widget instance, and initializing each instance with parameters inherited from both the normalized data structure and the selected three-dimensional template. This includes assigning geometrical properties, default material states, and placeholder bindings for subsequent data synchronization.

For example, when a "pumpStatusLamp" detected in the 2D artefact is mapped to a "rotaryPumpTemplate.glb" in the template library, the three-dimensional asset generation module 308 instantiates a new three-dimensional pump mesh in the scene graph, configures its transformation matrix according to the extracted spatial information, and sets up slots for live-status indicators such as colour and rotational speed.

Further, the conversion automation module 112 is enabled to synchronize the plurality of three-dimensional widget instances with the plurality of live data streams. Synchronisation is performed by application of an algorithm such as at least one of an observer-pattern event-dispatcher, a publish-subscribe message queue, or a reactive-programming stream-binding algorithm on an incoming sensor feed. The algorithm propagates every data change to transformation, colour, or animation parameters of the corresponding widget instance, ensuring the visual state of each instance accurately reflects real-world process values.

In one embodiment, the three-dimensional asset generation module 308 applies the reactive-programming stream-binding algorithm. For instance, in a glass-bottling plant dashboard, when a sensor reports an increased motor speed, the corresponding three-dimensional pump widget in an interactive scene animates its handle rotation accordingly, and the status indicator changes colour in real time. This allows operators on the plant floor to immediately perceive and react to process dynamics-such as rising pressure or motor activity-without the need for any manual updating or custom scripting.

The conversion automation module 112 is configured to cause the processor 202 to synchronise, via the three-dimensional asset generation module 308, each of the plurality of three-dimensional widget instances to a corresponding live data stream through an application programming interface provided by a data platform. Synchronisation is carried out by invoking a Representational State Transfer endpoint such as "/api/v1/stream/subscribe/{uuid}", which returns JSON packets containing time-stamped values. A data platform is scalable middleware that brokers Open Platform Communications Unified Architecture messages between plant controllers and visualisation clients; an example is a Siemens Industrial Edge Data Broker deployed on a factory-floor network switch.

The conversion automation module 112 is configured to cause the processor 202 to display, via the three-dimensional widget generator UI portal 312, a live preview of the plurality of three-dimensional widget instances in a runtime environment. The three-dimensional widget generator UI portal 312 renders the scene graph inside a HyperText Markup Language 5 canvas using Web Graphics Library version 2.0 shaders so that a designer can orbit, zoom and annotate the live preview through a browser. A runtime environment is an execution container, such as a WinCC Unified Runtime station or a web-based extended-reality headset, both of which accept the rendered frame stream at 60 frames per second.

The conversion automation module 112 is configured to cause the processor 202 to allocate and store, via the storage module 318, a plurality of historical layout states and extricate a selected historical layout state upon receiving a rollback request. Each historical layout state is a snapshot of the normalized data structure that is captured after a confirmed design change and stored in a version-control database that records commit time, author and differential. A rollback request is received from the automated chat interface 320 when a user enters a command such as "undo to layout from yesterday 14:00". In response, the storage module 318 retrieves the corresponding commit and replaces the active normalized data structure, thereby reinstating an earlier visual arrangement.

The conversion automation module 112 is configured to cause the processor 202 to control execution, via the artificial intelligence (AI) orchestration layer 314, of regeneration of the plurality of three-dimensional widget instances based on a modified normalized data structure and output delta updates to the rendering engine 316. The artificial intelligence (AI) orchestration layer 314 monitors dependency graphs and triggers regeneration tasks whenever the modified normalized data structure invalidates previously rendered UI widgets. Delta updates are incremental scene-graph modifications that allow the rendering engine 316 to refresh only the changed UI widgets, thereby conserving bandwidth and compute resources. Examples of the delta updates include, but are not limited to, a position-offset packet for a single slider, a material-colour change event for an alarm lamp and a text-label string replacement for a tank-level readout. Execution control is performed by application of an algorithm such as at least one of a directed-acyclic-graph scheduler, an event-sourcing pattern or a container-orchestrated microservice choreographer on pending regeneration tasks. The algorithm determines dependency order, allocates compute threads and signals completion events so that only affected UI widgets are regenerated, which minimises processor load. In one embodiment, the artificial intelligence (AI) orchestration layer 314 applies the directed-acyclic-graph scheduler.

The conversion automation module 112 is configured to cause the processor 202 to output, via the rendering engine 316, the plurality of three-dimensional widget instances to at least one runtime environment. The plurality of three-dimensional widget instances are configured to interact with real-world process data in real time. The rendering engine 316 serialises the scene graph into a binary Graphics Language Transmission Format stream and transmits the stream over HyperText Transfer Protocol Secure to a remote browser session or to a WinCC Unified Runtime station so that plant operators immediately perceive status changes, such as a conveyor belt slowing from 1.2 metres per second to 0.8 metres per second.

The conversion automation module 112 is configured to cause the processor 202 to control, via the rendering engine 316, a plurality of display parameters including a camera perspective in the runtime environment. A camera perspective is controlled by application of an algorithm such as at least one of an arcball-rotation algorithm, a first-person navigation algorithm or a smooth-damp orbit algorithm on user-pointer input and scene-bounding information. The algorithm adjusts field-of-view angles expressed in degrees, near-clip planes expressed in metres and depth of field expressed in pixels so that a designer can focus on critical UI widgets without visual clutter. In one embodiment, the rendering engine 316 applies the arcball-rotation algorithm.

In one example, the input interface is configured to receive a plurality of 2D human machine interfaces (HMI) artefacts and a plurality of natural-language annotations. The input interface is a software service that watches a network folder, a message queue or a Representational State Transfer endpoint and forwards uploaded files to the artificial intelligence (AI) engine 304. An example of the input interface is a Node.js Express server that accepts multipart-form uploads of WinCC screen archives and accompanying markdown notes.

In one example, the detection module 302 is configured to detect a plurality of artefact formats in the plurality of 2D human machine interfaces (HMI) artefacts and to select a parsing routine for each artefact format for use by the language model engine 324. Artefact-format detection is performed by application of an algorithm such as at least one of a magic-number byte-signature lookup algorithm, a support-vector-machine classifier or a convolutional-neural-network image-header recogniser on the header bytes of the file. The algorithm outputs a format label such as "WinCCComfortXML" or "UnifiedRTScreenZIP", which the detection module 302 maps to the correct parser. In one embodiment, the detection module 302 applies the magic-number byte-signature lookup algorithm.

In one example, the language model engine 324 is configured to detect a plurality of UI component descriptors and a plurality of spatial relations from the plurality of 2D human machine interfaces (HMI) artefacts and the plurality of natural-language annotations. The detection procedure and algorithms are identical to those described earlier for the computer-implemented method, and the language model engine 324 applies the Bidirectional Encoder Representations from Transformers sequence-labelling algorithm to emit bounding-box coordinates.

In one example, the normalized data structure generator 322 is configured to generate a normalized data structure comprising a plurality of widget identifiers and the plurality of spatial relations. The normalized data structure generator 322 serialises the information into JSON and validates the schema against a JSON Schema Definition draft-07 file before storage.

In one example, the automated chat interface 320 is configured to receive a plurality of dialogue-based modification requests and to modify the normalized data structure in response to the plurality of dialogue-based modification requests. The automated chat interface 320 relies on the reinforcement-learning-from-human-feedback policy model outlined previously, thereby enabling conversational layout editing with latency below 200 milliseconds per request.

In one example, the knowledge model 306 is configured to determine a mapping between the plurality of detected UI widgets and a plurality of three-dimensional widget templates in the template library database 310. The hierarchical ontology-matching algorithm, previously described, is used again to achieve this mapping so that functional equivalence is preserved between 2D representations and three-dimensional representations.

In one example, the three-dimensional asset generation module 308 is configured to allocate a unique identifier to each of the plurality of detected UI widgets to enable synchronisation with at least one of the plurality of live data streams. The unique-identifier allocation process mirrors the Universally Unique Identifier generation approach discussed above.

The three-dimensional asset generation module 308 is further configured to generate the plurality of three-dimensional widget instances and to synchronise the plurality of three-dimensional widget instances with the plurality of live data streams. The reactive-programming stream-binding algorithm is reused so that plant data immediately drive geometry or material updates in a three-dimensional scene.

The three-dimensional asset generation module 308 is further configured to synchronise each of the plurality of three-dimensional widget instances to a corresponding live data stream via an application programming interface provided by a data platform. The Representational State Transfer endpoint "/api/v1/stream/subscribe/{uuid}" is again employed to create WebSocket channels that broadcast fresh sensor values.

The three-dimensional widget generator UI portal 312 configured to display a live preview of a plurality of three-dimensional widget instances in a runtime environment. The three-dimensional widget generator UI portal 312 streams Web Graphics Library frames at a resolution of 1920 × 1080 pixels, giving engineers an immediate view of how a generated scene will appear in production.

In one example, the storage module 318 is configured to allocate and store a plurality of historical layout states and to extricate a selected historical layout state upon receiving a rollback request. The storage module 318 is a Git-compatible object database that keeps delta-compressed snapshots, enabling rapid rollbacks to past layouts without losing later iterations.

In one example, the artificial intelligence (AI) orchestration layer 314 configured to control execution of regeneration of the plurality of three-dimensional widget instances based on a modified normalized data structure and to output delta updates to the rendering engine 316. The directed-acyclic-graph scheduler continues to coordinate task execution to ensure that the delta updates reach the rendering engine 316 in the correct order.

In one example, the rendering engine 316 is configured to output a plurality of three-dimensional widget instances to at least one runtime environment, wherein the plurality of three-dimensional widget instances are configured to interact with real-world process data in real time. The rendering engine 316 streams binary Graphics Language Transmission Format over HyperText Transfer Protocol Secure to client browsers, thereby enabling an operator wearing an augmented-reality headset to see a valve icon flash red within 80 milliseconds of a pressure alarm received from a plant-control system.

The rendering engine 316 is further configured to control a plurality of display parameters including a camera perspective in a runtime environment. The arcball-rotation algorithm remains the preferred technique for modifying a camera perspective in response to pointer or touch gestures so that users can inspect remote corners of the three-dimensional scene.

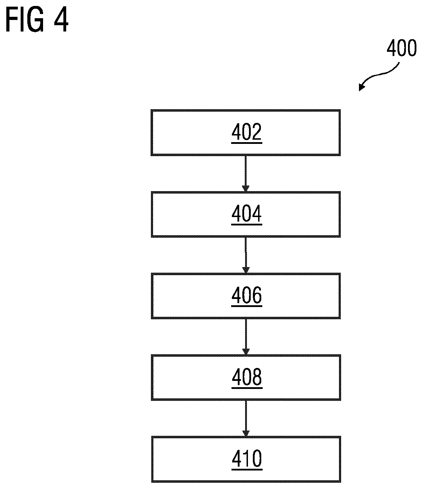

FIG. 4 is a process flowchart illustrating an exemplary method of automated conversion of 2D human machine interfaces (HMI) artefacts into interactive three-dimensional human machine interfaces (HMI), according to an embodiment of the present invention. The method begins at step 402.

At step 402, a plurality of 2D human machine interfaces (HMI) artefacts and a plurality of natural-language annotations are received at the artificial intelligence (AI) engine (304).

At step 404, a plurality of UI component descriptors and a plurality of spatial relations are detected from the plurality of 2D human machine interfaces (HMI) artefacts and the plurality of natural-language annotations by the language model engine (324).

At step 406, a mapping between a plurality of detected UI widgets and a plurality of three-dimensional widget templates in a template library database (310) is determined by the knowledge model (306).

At step 408, a plurality of three-dimensional widget instances are generated by the three-dimensional asset generation module (308). The plurality of three-dimensional widget instances are synchronized with a plurality of live data streams.

At step 410, the plurality of three-dimensional widget instances are output by the rendering engine (316) to at least one runtime environment. The plurality of three-dimensional widget instances are configured to interact with real-world process data in real time.

The present invention can take a form of a computer program product comprising program modules accessible from computer-usable or computer-readable medium storing pro-gram code for use by or in connection with one or more computers, the processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical comput-er-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both the processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in meth-od claims may also be apply to system/apparatus claims.

## Claims

1. A computer-implemented method for automated conversion of a plurality of 2D human machine interfaces (HMI) artefacts into a plurality of interactive three-dimensional human machine interfaces (HMI), the method comprising:
receiving, at an artificial intelligence (AI) engine (304), a plurality of 2D human machine interfaces (HMI) artefacts and a plurality of natural-language annotations;
detecting, by a language model engine (324), a plurality of User interface (UI) widgets and a plurality of spatial relations from the plurality of 2D human machine interfaces (HMI) artefacts and the plurality of natural-language annotations;
determining, by a knowledge model (306), a mapping between the plurality of detected UI widgets and a plurality of three-dimensional widget templates in a template library database (310);
generating, by a three-dimensional asset generation module (308), a plurality of three-dimensional widget instances based on the determined mapping;
synchronizing, by the three-dimensional asset generation module (308), the plurality of three-dimensional widget instances with a plurality of live data streams; and
outputting, by a rendering engine (316), the plurality of three-dimensional widget instances to at least one runtime environment, wherein the plurality of three-dimensional widget instances are configured to interact with real-world process data in real time.

2. The method according to claim 1, further comprising:
detecting, by a detection module (302), a plurality of artefact formats in the plurality of 2D human machine interfaces (HMI) artefacts and applying a selected parsing routine for each detected artefact format prior to the detecting by the language model engine (324).

3. The method according to claim 1, further comprising:
generating, by a normalized data structure generator (322), a normalized data structure that comprises a plurality of widget identifiers and the plurality of spatial relations.

4. The method according to claim 1, further comprising:
allocating, by the three-dimensional asset generation module (308), a unique identifier to each of the plurality of detected UI widgets to enable synchronization with at least one of the plurality of live data streams.

5. The method according to claim 1, further comprising:
synchronizing, by the three-dimensional asset generation module (308), each of the plurality of three-dimensional widget instances to a corresponding live data stream via an application programming interface provided by a data platform.

6. The method according to claim 1, further comprising:
displaying, by a three-dimensional widget generator UI portal (312), a live preview of the plurality of three-dimensional widget instances in the runtime environment.

7. The method according to claim 6, further comprising:
receiving, via an automated chat interface (320), a plurality of dialogue-based modification requests and modifying the normalized data structure in response to the plurality of dialogue-based modification requests.

8. The method according to claim 7, further comprising:
controlling execution, by an artificial intelligence (AI) orchestration layer (314), of regeneration of the plurality of three-dimensional widget instances based on the modified normalized data structure and outputting delta updates to the rendering engine (316).

9. The method according to claim 1, further comprising:
allocating and storing, by a storage module (318), a plurality of historical layout states, and
extricating a selected historical layout state upon receiving a rollback request.

10. The method according to claim 1, further comprising:
controlling, by the rendering engine (316), a plurality of display parameters including a camera perspective in the runtime environment.

11. A system for automated conversion of a plurality of 2D human machine interfaces (HMI) artefacts into a plurality of interactive three-dimensional human machine interfaces (HMI), comprising:
an artificial intelligence (AI) engine (304) configured to receive a plurality of 2D human machine interfaces (HMI) artefacts and a plurality of natural-language annotations;
a language model engine (324) configured to detect a plurality of user interface (UI) widgets and a plurality of spatial relations from the plurality of 2D human machine interfaces (HMI) artefacts and the plurality of natural-language annotations;
a knowledge model (306) configured to determine a mapping between the plurality of detected UI widgets and a plurality of three-dimensional widget templates in a template library database (310);
a three-dimensional asset generation module (308) configured to generate a plurality of three-dimensional widget instances based on the mapping, and to synchronize the plurality of three-dimensional widget instances with a plurality of live data streams;
and
a rendering engine (316) configured to output the plurality of three-dimensional widget instances to at least one runtime environment, wherein the plurality of three-dimensional widget instances are configured to interact with real-world process data in real time.

12. The system according to claim 11, further comprising:
a detection module (302) configured to detect a plurality of artefact formats in the plurality of 2D human machine interfaces (HMI) artefacts and to select a parsing routine for each artefact format for use by the language model engine (324).

13. The system according to claim 11, further comprising:
a normalized data structure generator (322) configured to generate a normalized data structure comprising a plurality of widget identifiers and the plurality of spatial relations.

14. The system according to claim 11, wherein the three-dimensional asset generation module (308) is further configured to:
allocate a unique identifier to each of the plurality of detected UI widgets to enable synchronization with at least one of the plurality of live data streams.

15. The system according to claim 11, wherein the three-dimensional asset generation module (308) is further configured to:
synchronize each of the plurality of three-dimensional widget instances to a corresponding live data stream via an application programming interface provided by a data platform.
